Europäisches Patentamt

European Patent Office

Office européen des brevets

(11) Veröffentlichungsnummer: **0 441 248 A1**

## EUROPÄISCHE PATENTANMELDUNG

(21) Anmeldenummer: 91101326.6

(22) Anmeldetag: 01.02.91

(51) Int. Cl.⁵: **F16H 59/04**, F16H 61/34

(30) Priorität: 01.02.90 DE 4002932

(43) Veröffentlichungstag der Anmeldung:
14.08.91 Patentblatt 91/33

(84) Benannte Vertragsstaaten:
DE ES FR GB IT NL SE

(71) Anmelder: **Iveco Magirus Aktiengesellschaft**
**Schillerstrasse 2 Postfach 27 40**
**W-7900 Ulm/Donau(DE)**

(72) Erfinder: **Rickert, Udo**
**Johann-Strauss-Strasse 27**
**W-7910 Neu-Ulm(DE)**

(74) Vertreter: **Socha, Peter, Dipl.-Ing.**
**Iveco Magirus AG Patentabteilung**
**Schillerstrasse 2**
**W-7900 Ulm(DE)**

(54) **Vorrichtung zum Schalten des Getriebes eines Kraftfahrzeuges.**

(57)
2.1. Bekannte Getriebeschaltvorrichtungen besitzen im Getriebe integrierte Schalthebel oder einen Lagerbock für den Schalthebel, welcher außen auf das Getriebe aufgesetzt ist. Die Betätigung der getriebeinneren Schalt-Drehwelle erfolgt über ein gelenkiges Zwischenelement, welches hochbeansprucht und einem erhöhten Verschleiß ausgesetzt ist.

2.2. Es wird eine Getriebeschaltvorrichtung (20) vorgeschlagen, deren oberseitig am Getriebe angelenkter Schalthebel (5) direkt an einem exzentrischen Kugelgelenk (4) der axialverschieblichen und drehbaren Schalt-Drehwelle (1, 2, 3) angelenkt ist. Der Schalthebel (5) ist durch eine auf der Getriebeoberseite angelenkte Koppeleinrichtung (19) raumbeweglich gelagert. Die Koppeleinrichtung (19) sind vorzugsweise drei Führungsstangen (6) mit Kugelgelenkbefestigung am Getriebe sowie am Schalthebel (5). Zwei der Führungsstangen (6) können durch einen Lenker (8) mit Scharniergelenk (9) ersetzt sein.

Fig. 1

## VORRICHTUNG ZUM SCHALTEN DES GETRIEBES EINES KRAFTFAHRZEUGES

Die Erfindung betrifft eine Vorrichtung zum Schalten des Getriebes eines Kraftfahrzeuges, mit einem oberseitig am Getriebe angelenkten Schalthebel und einer im Getriebe integrierten Schalt-Drehwelle.

Aus EP 0 077 053 und DE-OS 27 43 875 sind Vorrichtungen zum Schalten des Getriebes eines Kraftfahrzeuges der eingangs genannten Art bekannt, bei denen der Schalthebel mittels eines Zwischenelementes mit dem Getriebe verbunden ist. Hierbei wird nur eine Bewegungsrichtung bzw. Kraft gegen das Getriebe abgestützt. Das dem Schalthebel zugeordnete getriebeaußenseitige Lager kann als sog. "schwimmendes Schalthebellager" bezeichnet werden, wobei das Schalthebellager in Fahrzeuglängsrichtung verschiebbar am Aufbau befestigt ist. Die Verschiebung erfolgt dabei durch eine am Getriebe abgestützte Stange. Insbesondere aufgrund der Verwendung eines gelenkigen Zwischenelementes zwischen Schalthebel und Getriebe ergibt sich eine besonders aufwendige Übertragungsanordnung; das Zwischenelement ist sehr kurz und erfordert insbesondere aufwendige Gelenkkonstruktionen, welche im Betrieb hochbeansprucht und entsprechend einem erhöhten Verschleiß unterworfen sind. Aufgrund der aufwendigen Gelenkkonstruktion ergibt sich ein vergleichsweise großes Spiel bei einem Schaltvorgang, also keine exakten definierten Schaltbewegungen. Unter Umständen führt dies dazu, daß versehentlich im Betrieb ein verkehrter Gang eingelegt wird.

Aufgabe der Erfindung ist die Schaffung einer Getriebeschaltungsvorrichtung der eingangs genannten Art, welche sehr einfach aufgebaut und im Betrieb leicht und exakt zu handhaben ist.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Merkmale der Unteransprüche 2 bis 10.

Die Erfindung betrifft mithin eine (mechanische) Knüppelschaltung, vorzugsweise mit Bediengriff, wobei der Bediengriff oberhalb des eigentlichen Getriebes angeordnet ist. Die Anlenkung des Schalthebels erfolgt direkt am Triebwerksblock insbesondere für Lastkraftwagen in Haubenbauweise für Getriebe mit Fernschaltungsbetätigung, die für Frontlenkerfahrzeuge vorgesehen sind. Unter einem Lastkraftwagen in Haubenbauweise versteht man ein Fahrzeug, dessen Motor vor dem eigentlichen Fahrerhaus angeordnet und durch eine Haube abgedeckt ist, im Gegensatz zu Frontlenkerfahrzeugen, bei denen der Motor vorzugsweise unter dem Fahrerhaus und das Getriebe hinter dem Fahrerhaus angeordnet sind. Entsprechend der Getriebeanordnung ist der Schalthebel des Getriebes zum Fahrersitz nach hinten bzw. nach vorne geführt.

Unter einer Fernschaltung versteht man eine Vorrichtung mit vom Inneren des Getriebes nach außen geführten beweglichen Teilen, welche die Bewegung eines entfernt angebrachten Schalthebels über eine oder mehrere Schaltstangen zu den im Inneren des Getriebes liegenden Schaltungsteilen weiterleitet.

Bekannt ist insbesondere die Drehwellenfernschaltung, bei der der Gang durch Drehen der Schaltwelle geschaltet wird, welche ungefähr senkrecht zur Fahrzeuglängsrichtung angeordnet ist. Die Schaltgasse wird durch Verschieben dieser Welle gewählt.

Bei einer anderen Form der Fernschaltung wird eine etwa in Fahrzeuglängsrichtung angeordnete Schaltwelle vom Inneren des Getriebes nach außen geführt. Dabei wird der Gang durch axiales Verschieben der Schaltwelle geschaltet und die Schaltgasse durch Drehen dieser Welle gewählt.

Diesen Prinzipien gemeinsam ist die Einleitung der Betätigungsbewegung durch eine Welle, die zwei Freiheitsgrade besitzt, nämlich einen translatorischen Freiheitsgrad in Richtung der Welle und einen rotatorischen Freiheitsgrad um das Zentrum der Welle. Je nach Konstruktion der Fernschaltung wird der eine Freiheitsgrad der Schaltbewegung zugeordnet und der andere der Wählbewegung.

Wesen der Erfindung ist insbesondere eine im Getriebe angeordnete Dreh-Schaltwelle, welche (außerhalb des eigentlichen Getriebes) ein exzentrisch zu deren Achse befindliches Kugelgelenk aufweist. Die Dreh-Schaltwelle reicht also aus dem Getriebe heraus und besitzt einen feststehenden Radialhebel, an welchem an radial äußerer Stelle das vorgenannte Kugelgelenk vorgesehen ist. Das Kugelgelenk ist direkt mit dem eigentlichen (vergleichsweise langen) Schalthebel mit Bediengriff gelenkig verbunden. Am Schalthebel befinden sich Lagerstellen für eine Koppeleinrichtung, welche ihrerseits getriebefest mittels Gelenken verbunden ist und eine Raumbewegung der Schaltwelle gestattet ohne Zuhilfenahme einer separaten Kulissenführung ausschließlich aufgrund der vorgegebenen Schaltwege der getriebeinneren Schaltungsteile entsprechend der vorgegebenen Axialverschieblichkeit und Verdrehmöglichkeit der Welle.

Vorgenannte Koppeleinrichtung kann drei Führungsstangen aufweisen, welche je mit einem ersten Kugelgelenk am Schalthebel und je mit einem zweiten Kugelgelenk am Getriebe (oder fest mit diesem verbundenen Teilen) befestigt sind.

Die Koppeleinrichtung kann alternativ ein Lenker sein, der mit einem Scharniergelenk am Schalthebel und einem Kugelgelenk getriebefest verbunden ist, wobei eine weitere Führungsstange nach Art der vorgenannten Führungsstangen vorgesehen ist, welche mit einem ersten Kugelgelenk am Schalthebel und einem zweiten Kugelgelenk getriebefest befestigt ist.

Eine weitere Ausführungsvariante der Koppeleinrichtung sieht einen Lenker vor, der mittels Kardangelenk am Schalthebel und mittels Scharniergelenk getriebefest befestigt ist.

Eine andere Ausgestaltung der Koppeleinrichtung ist ein Lenker, welcher am Schalthebel mittels Kugelgelenk und am Getriebe mit einem Scharniergelenk verbunden ist, wobei eine weitere Führungsstange nach Art der erstgenannten Führungsstangen vorgesehen ist, die mittels Kugelgelenk mit dem Schalthebel und mittels eines weiteren zweiten Kugelgelenks mit dem Getriebe oder mit getriebefesten Teilen verbunden ist, wobei letztgenanntes zweites Kugelgelenk auch an den Lenker angelenkt sein kann.

Schließlich sieht eine Ausführungsvariante einen Lenker vor, welcher mittels einem ersten Kugelgelenk am Schalthebel und einem Scharniergelenk getriebefest verbunden ist. Der Schalthebel ist hierbei gerade ausgebildet.

Unter einem Scharniergelenk ist eine eventuell aus mehreren einfachen Gelenken bestehende Anordnung zu verstehen, die ein Drehen der mit dem Scharniergelenk verbundenen Teile um eine Achse ermöglicht, die relativ zu beiden Teilen feststeht.

Die Erfindung benötigt mithin trotz des direkt an der Schaltwelle angelenkten vergleichsweise langen Schalthebels keine aufwendigen Gelenkkonstruktionen mit hoher Beanspruchung wie nach dem Stand der Technik, welche einem Verschleiß und einem erhöhten Spiel ausgesetzt sind. Die Realisierung einer Knüppelschaltung mit Griff eignet sich insbesondere für Haubenfahrzeuge, bei denen die Knüppelschaltung über dem Getriebe angeordnet ist. Besonderer Vorteil der Erfindung ist, daß auch Getriebe mit Fernschaltungsbetätigung verwendet werden können, welche für Frontlenkerfahrzeuge vorgesehen sind. Bei Frontlenker- und Haubenfahrzeugen können gleiche Getriebekonstruktionen verwendet werden. Die Koppeleinrichtung verwendet einfache handelsübliche Gelenke, welche hinlänglich erprobt sind. Aufgrund des direkt an der Schalt-Drehwelle angeschlossenen Schalthebels ergeben sich nicht nur wenige Verschleiß-stellen mit geringem Spiel, sondern es werden auch die Gelenke günstig belastet. Da die Abstützung der Wähl- und Schaltkräfte über mehrere Gelenke erfolgt, deren Anordnung je nach Anwendungsfall gewählt werden kann, lassen sich die Wähl- und Schaltwege beliebig übersetzen oder umkehren, auch unabhängig voneinander. Der Montage- und Abdichtungsaufwand ist gering.

Die Erfindung wird nachfolgend anhand von Ausführungsbeispielen unter Bezugnahme auf beigefügte Zeichnung näher erläutert; es zeigen:

Fig. 1    eine Getriebeschaltvorrichtung in schematischer Darstellung mit horizontaler Drehwellenschaltung und Abstützung des Schalthebels mittels dreier Führungsstangen,

Fig. 2    eine Getriebeschaltungsvorrichtung ähnlich Fig.1 für eine vertikale Drehwellenschaltung mit einer Abstützung der Schaltwelle mittels dreier Führungsstangen,

Fig. 3    eine Getriebeschaltvorrichtung mit horizontaler Drehwellenschaltung und Abstützung des Schalthebels über drei Führungsstangen ähnlich der Ausführungsvariante gemäß Fig. 1,

Fig. 4    eine Getriebeschaltvorrichtung mit einer Schaltwelle in Fahrzeuglängsrichtung und Abstützung der Welle mittels dreier Führungsstangen,

Fig. 5    eine Getriebeschaltvorrichtung mit horizontaler Schalt-Drehwelle, wobei der Schalthebels mittels einer Führungsstange und einem Lenker abgestützt wird, und

Fig. 6    eine Getriebeschaltvorrichtung mit vertikaler Drehwelle und Abstützung des Schalthebels mittels Führungsstange und Lenker.

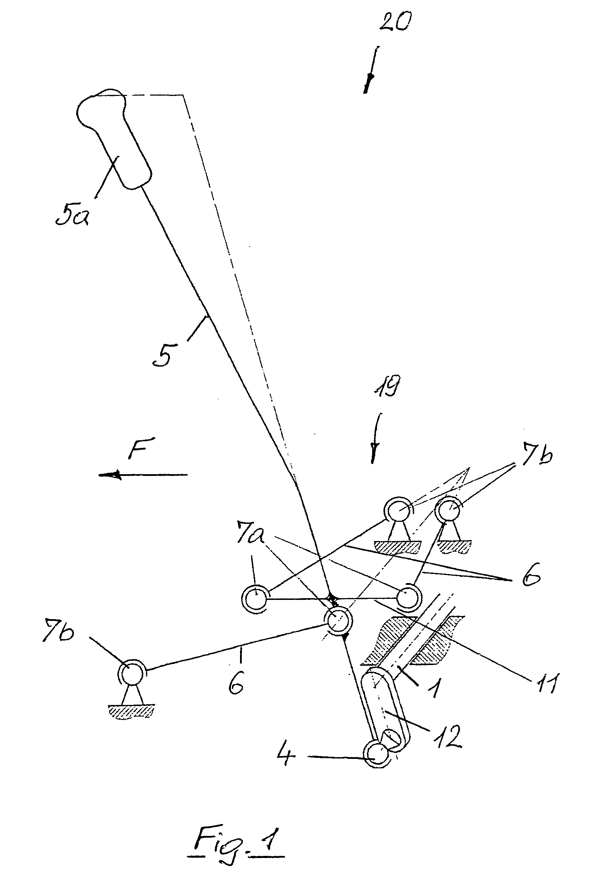

Die Getriebeschaltvorrichtung (20) gemäß Fig.1 umfaßt einen oberseitig am Getriebe angelenkten, gegebenenfalls abgewinkelten Schalthebel (5) mit oberem Bediengriff (5a), wobei der Schalthebel (5) direkt an einem exzentrischen Kugelgelenk (4) der axial verschieblichen und drehbaren Schalt-Drehwelle (1) angelenkt ist.

Die Schalt-Drehwelle (1) ist im Getriebe im wesentlichen horizontal in Fahrzeugquerrichtung angeordnet und ragt seitlich aus dem (nicht veranschaulichten) Getriebe heraus. Am herausragenden seitlichen Ende der Schalt-Drehwelle (1) ist ein Radialhebel (12) drehfest aufgesteckt, welcher an einer radial äußeren Stelle das Kugelgelenk (4) aufnimmt.

Bei einer Axialverschiebung der Schalt-Drehwelle (1) wird die Welle in eine andere Schaltgasse bewegt, mithin die Gangwahl getroffen. Bei einer Drehbewegung der Schalt-Drehwelle (1) wird der entsprechende Gang der Schaltgasse eingelegt bzw. ausgerückt.

Zwischen Bediengriff (5a) und Kugelgelenk (4) des Schalthebels (5) befindet sich bei fixer durchgehender Anordnung des Schalthebels (5) ein erstes Kugelgelenk (7a), welches das eine Ende einer Führungsstange (6) gelenkig aufnimmt, dessen anderes Ende an einem weiteren Kugelgelenk (7b) getriebefest an der Getriebeaußenseite angelenkt ist. Vorgenannte Führungsstange (6) erstreckt sich im wesentlichen senkrecht zur Schalt-Drehwelle (1) sowie im wesentlichen in Fahrtrichtung (F) bzw. in Fahrzeuglängsrichtung, insbesondere bei einer Draufsicht auf das Fahrzeug.

Im Bereich des vorgenannten ersten Kugelgelenks (7a) ist am Schalthebel (5) eine feste, den Schalthebel (5) kreuzende integrierte Verbindungsstange (11) vorgesehen, deren freie Enden weitere erste Kugelgelenke (7a) aufnehmen, welchen zwei weiteren Führungsstangen (6) nach Art der erstgenannten Führungsstange (6) zugeordnet sind und getriebefeste Anlenkstellen in Form von zwei weiteren Kugelgelenken (7b) besitzen. Die Verbindungsstange (11) erstreckt sich im wesentlichen senkrecht zur Schalt-Drehwelle (1) (je nach Abstimmung der Wege).

Sämtliche vorgenannten drei Führungsstangen (6) samt zugehöriger erster und zweiter Kugelgelenke (7a bzw. 7b) sind Teil einer Koppeleinrichtung (19), die außerhalb des eigentlichen Getriebes angeordnet ist und nachträglich leicht bei einem konventionellen Getriebe für Fahrzeuge mit Frontlenkerbauweise sowie bei Haubenfahrzeugen eingerichtet werden kann mit Hilfe einfacher Mittel. Die Anordnung der einzelnen Gelenkstellen sowie die Länge der einzelnen Hebel bzw. Stangen wird je nach Anwendungsfall festgelegt. Es lassen sich mithin die Wähl- und Schaltwege beliebig übersetzen oder umkehren, auch unabhängig voneinander, und zwar unter Verwendung einfacher handelsüblicher Gelenke, welche einer geringen Belastung ausgesetzt sind.

Für einen Schaltvorgang der Getriebeschaltvorrichtung (20) der Ausführungsform gemäß Fig. 1 wird bei einer Betätigung des Bediengriffes (5a) in Fahrtrichtung (F) das Kugelgelenk (4) der Schalt-Drehwelle (1) nach hinten und oben bei gleichzeitiger Drehung der Schalt-Drehwelle (1) bewegt. Bei dieser Schaltbewegung werden die einzelnen Gänge einer Schaltebene ein- oder ausgerückt. Wird der Bediengriff (5a) des Schalthebels (5) in Fahrzeugquerrichtung betätigt, erfährt das Kugelgelenk (4) der Schalt-Drehwelle (1) eine Querbewegung in die andere Richtung: entsprechend wird auch die Schalt-Drehwelle (1) in ihrer Axialrichtung im Getriebe verschoben und von einer Schaltgasse in die andere bewegt zwecks anschließender Einlegung anderer Gänge der neuen Schaltebene.

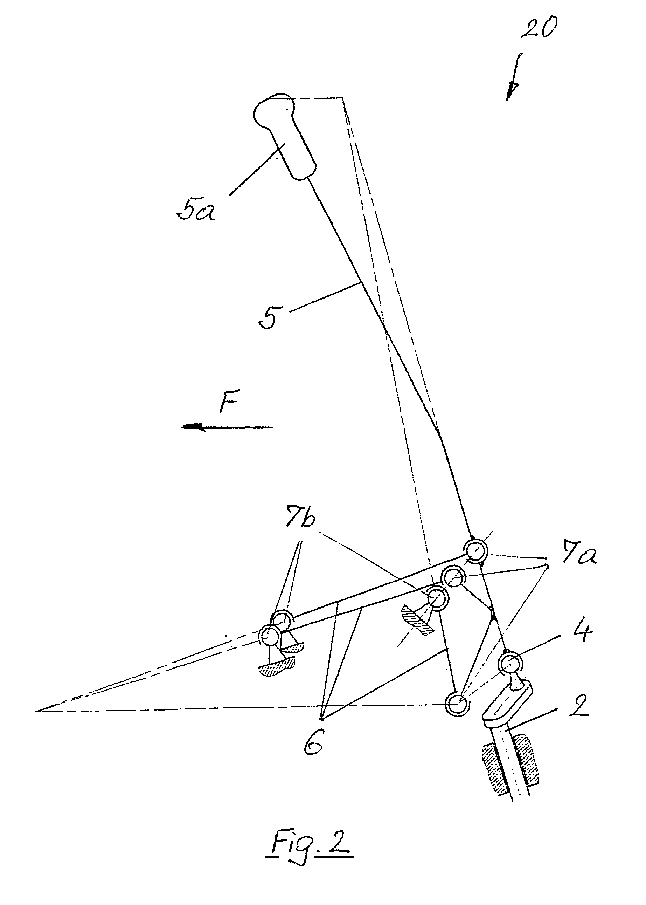

Die Getriebeschaltvorrichtung (20) gemäß Fig. 2 entspricht im wesentlichen derjenigen nach Fig. 1 und sieht alternativ eine im wesentlichen vertikal angeordnete Schalt-Drehwelle (2) vor. Die Abstützung des abgewinkelten Schalthebels (5) erfolgt ebenfalls über drei Führungsstangen nach Art der ersten Ausführungsvariante.

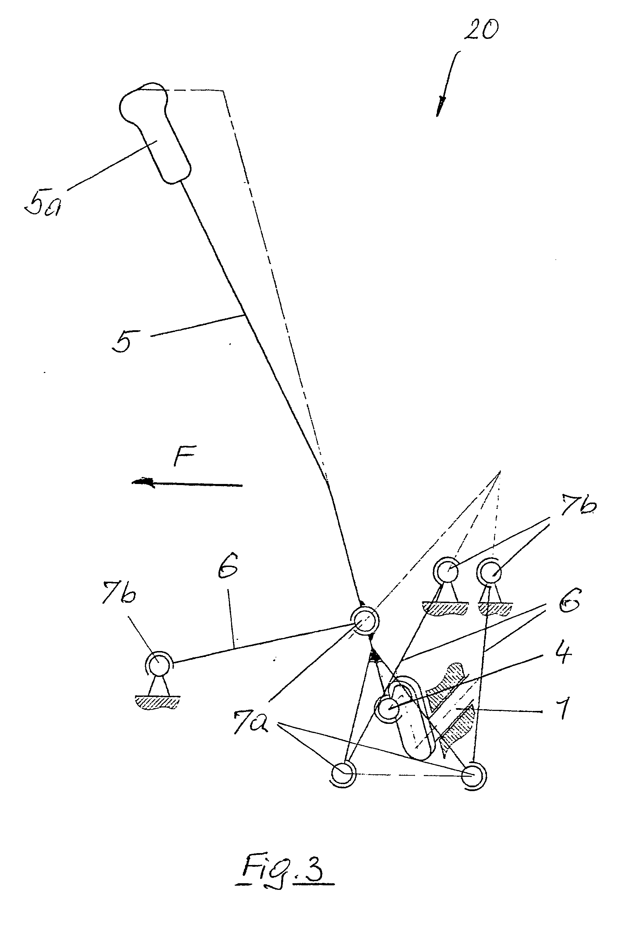

Die Ausführungsvariante der Getriebeschaltvorrichtung (20) nach Fig. 3 besitzt ebenfalls eine Koppeleinrichtung (19) in Form von drei Führungsstangen (6) der vorgenannten beiden Varianten sowie eine horizontale Schalt-Drehwelle (1) entsprechend der Ausführungsvariante gemäß Fig. 1; die Gesamtanordnung der Koppeleinrichtung (19) ist jedoch so getroffen, daß eine Umkehr der Schalt- und Wählrichtung am Getriebe gegenüber der Ausführungsvariante der Fig.1 gegeben ist. Diese Ausführungsvariante sowie die Ausführungsvariante gemäß Fig. 1 ermöglicht eine optimale Abstimmung der Wähl- und Schaltwege. Derartige Getriebeschaltvorrichtungen sind mithin vielseitig anwendbar und auf ein individuelles Getriebe mit Hilfe einfacher Mittel einstellbar bzw. umrüstbar.

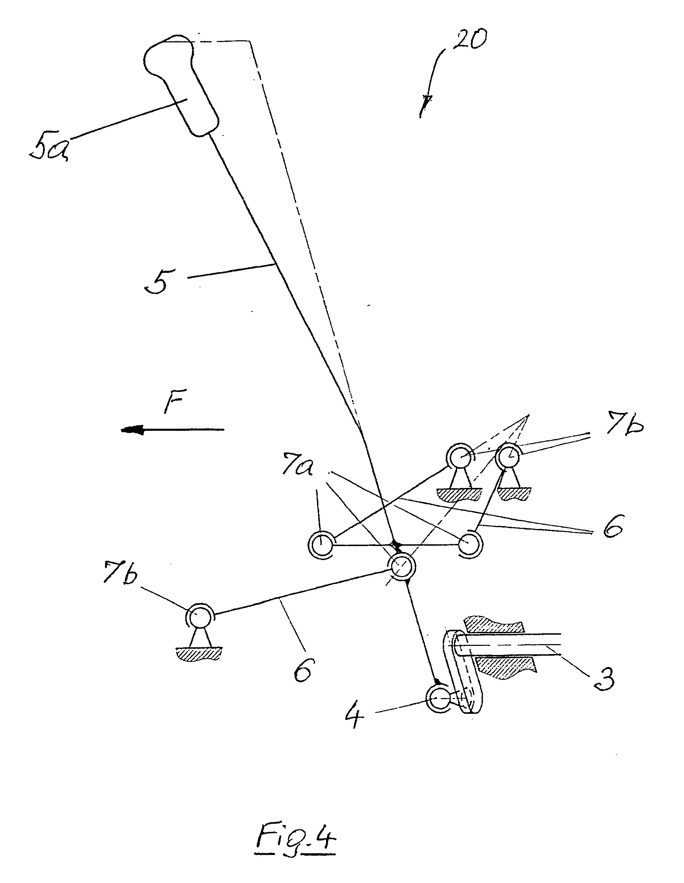

Die Getriebeschaltvorrichtung (20) der Fig. 4 ist ähnlich der vorgenannten aufgebaut und besitzt eine Schalt-Drehwelle (3), welche im wesentlichen in Fahrzeuglängsrichtung gelegen ist. Die Abstützung des Schalthebels (5) erfolgt wiederum über drei Führungsstangen (6) und entsprechende Kugelgelenke (7a bzw. 7b).

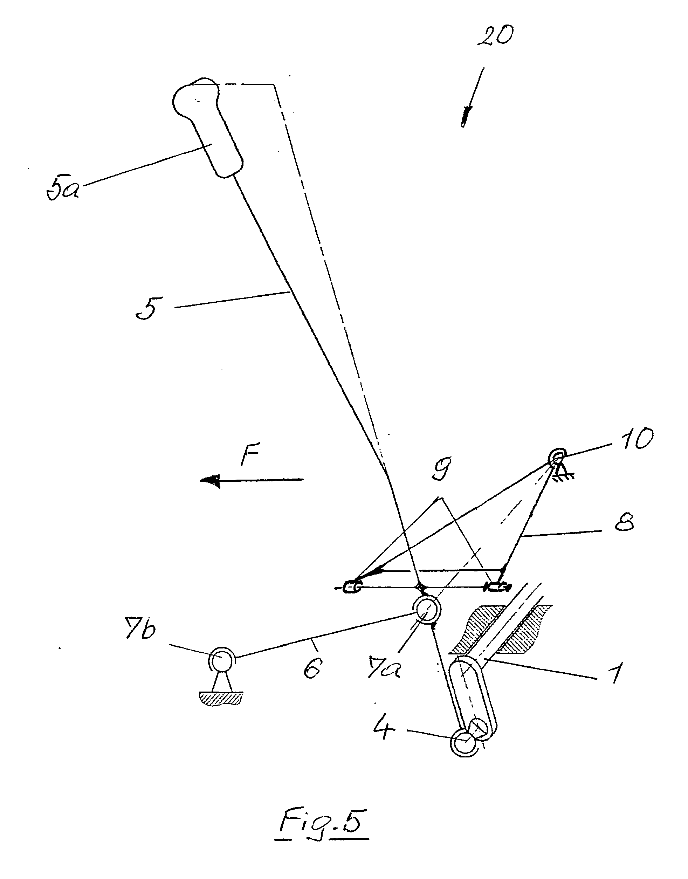

Die Ausführungsvariante der Fig. 5 ist gegenüber der erstgenannten Ausführungsvariante der Fig. 1 dahingehend modifiziert, daß zwei der dortigen Führungsstangen (6), nämlich diejenigen, welche sich im wesentlichen in Fahrzeugquerrichtung erstrecken, durch einen einzigen Lenker (8) ersetzt sind, welcher ein einziges getriebefestes Kugelgelenk (10) besitzt. Am dem Kugelgelenk (10) abgewandten Ende des Lenkers (8) ist ein Scharniergelenk (9) ausgebildet, dessen Achse fest mit dem (abgewinkelten) Schalthebel (5) verbunden ist (und die Verbindungsstange (11) der Fig. 1 ersetzt). Ersichtlich wird durch das Kugelgelenk (10) ein getriebefestes Kugelgelenk (7b) gegenüber der Ausführungsvariante nach Fig. 1 eingespart. Allerdings ergeben sich nicht soviele Abstimmungsmöglichkeiten einer Getriebeschaltvorrichtung, wie dies bei den vorgenannten Varianten der Fall ist.

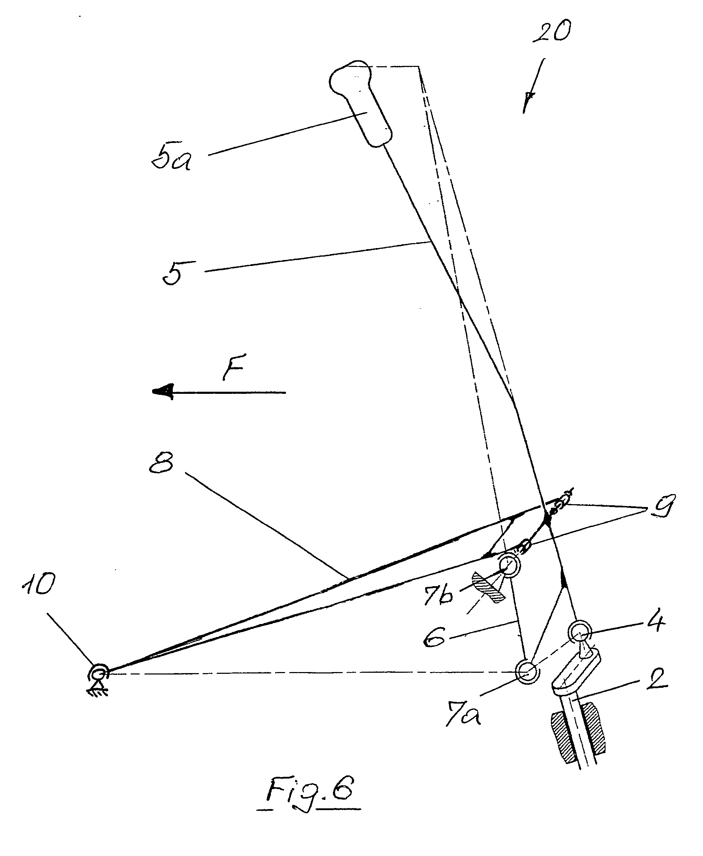

Das schließlich in Fig. 6 gezeigte Ausführungsbeispiel setzt sich im wesentlichen aus Einzelmerkmalen einer Getriebeschaltvorrichtung der Ausführungsvariante der Fig. 2 zusammen, wobei insbesondere eine im wesentlichen vertikale Schalt-Drehwelle (2) vorgesehen ist. Zwei der dortigen Führungsstangen (6) sind ähnlich der Ausführungsvariante nach Fig. 5 durch einen Lenker (8) ersetzt, welcher ein einziges getriebefestes Kugelgelenk (10) auf der einen Seite und auf der anderen Seite ein Scharniergelenk (9) aufweist, welches dem Schalthebel (5) in fixer Verbindung zugeordnet ist.

Sämtliche in der Zeichnung gezeigten und/oder in der Beschreibung erwähnten neuen Merkmale allein oder in sinnvoller Kombination sind erfindungswesentlich, auch soweit sie in den Ansprüchen nicht ausdrücklich beansprucht sind.

**Patentansprüche**

1. Vorrichtung (20) zum Schalten des Getriebes eines Kraftfahrzeuges, mit einem oberseitig am Getriebe angelenkten Schalthebel (5) und einer im Getriebe integrierten Schalt-Drehwelle (1, 2, 3),
dadurch gekennzeichnet,
daß der Schalthebel (5) direkt an einem exzentrischen Kugelgelenk (4) der Schalt-Drehwelle (1, 2, 3) angelenkt ist und außerhalb des Getriebes durch eine getriebeäußere Koppeleinrichtung (19) raumbeweglich gelagert ist.

2. Vorrichtung nach Anspruch 1,
dadurch gekennzeichnet,
daß die Koppeleinrichtung drei Führungsstangen (6) sind, die über endseitige erste Kugelgelenke (7a) am Schalthebel (5) und auf der anderen Seite durch zweite Kugelgelenke (7b) getriebefest angeordnet sind (Fig. 1 bis 4).

3. Vorrichtung nach Anspruch 2,
dadurch gekennzeichnet,
daß die ersten Kugelgelenke (7a) räumlich voneinander getrennt und fix zueinander angeordnet sind (Fig.1).

4. Vorrichtung nach Anspruch 1,
dadurch gekennzeichnet,
daß die Koppeleinrichtung ein Lenker (8) ist, der über ein Scharniergelenk (9) am Schalthebel (5) und über ein Kugelgelenk (10) getriebefest angelenkt ist und eine Führungsstange (6), die über ein Kugelgelenk (7a) am Schalthebel (5) und über ein Kugelgelenk (7b) am Getriebe angelenkt ist (Fig. 5 und 6).

5. Vorrichtung nach Anspruch 1,
dadurch gekennzeichnet,
daß die Koppeleinrichtung ein Lenker ist, der über ein Kardangelenk am Schalthebel (5) und über ein Scharniergelenk getriebefest angelenkt ist.

6. Vorrichtung nach Anspruch 1,
dadurch gekennzeichnet,
daß die Koppeleinrichtung ein Lenker ist, der über ein Kugelgelenk am Schalthebel (5) und über ein Scharniergelenk getriebefest angelenkt ist, wobei eine weitere Führungsstange vorgesehen ist, die über ein erstes Kugelgelenk (7a) am Schalthebel (5) und über ein zweites Kugelgelenk (7b) getriebefest angelenkt oder am Lenker selbst angelenkt ist.

7. Vorrichtung nach Anspruch 1,
dadurch gekennzeichnet,
daß die Koppeleinrichtung ein Lenker ist, der über ein erstes Kugelgelenk (7a) am Schalthebel (5) und über ein Scharniergelenk getriebefest angelenkt ist.

8. Vorrichtung nach einem der Ansprüche 1 bis 7,
dadurch gekennzeichnet,
daß die Schalt-Drehwelle (1) in Fahrzeugquerrichtung und im wesentlichen horizontal angeordnet ist (Fig. 1 und 3).

9. Vorrichtung nach einem der Ansprüche 1 bis 7,
dadurch gekennzeichnet,
daß die Schalt-Drehwelle (2) im wesentlichen vertikal angeordnet ist (Fig. 2 und 6).

10. Vorrichtung nach einem der Ansprüche 1 bis 7,
dadurch gekennzeichnet,
daß die Schalt-Drehwelle (3) in Fahrzeuglängsrichtung und im wesentlichen horizontal angeordnet ist (Fig.4).

Fig. 1

Fig. 2

Fig.3

Fig.4

Fig.5

Fig.6

**Europäisches Patentamt**

# EUROPÄISCHER RECHERCHENBERICHT

Nummer der Anmeldung

**EP 91 10 1326**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 115 224 (AUTOMOBILE PEUGEOT)<br>* Zusammenfassung; Ansprüche 1, 2; Figur 1 *<br>– – – | 1,2 | F 16 H 59/04<br>F 16 H 61/34<br>B 60 K 20/12 |
| A | FR-A-2 492 746 (UNIC SA)<br>* das ganze Dokument *<br>– – – | 1,2 | |
| A | US-A-2 819 626 (DAIMLER-BENZ)<br>* das ganze Dokument *<br>– – – | 1,5 | |
| A | DE-C-9 234 13 (PORSCHE)<br>* das ganze Dokument *<br>– – – | 1,10 | |
| A | DE-A-2 604 820 (MAGIRUS DEUTZ AG)<br>* das ganze Dokument *<br>– – – | 5 | |
| D,A | EP-A-0 077 053 (NISSAN MOTOR COMPANY)<br>* Zusammenfassung; Ansprüche 1-11; Figuren *<br>– – – | 1 | |
| D,A | DE-A-2 743 875 (MANNO KOGYO)<br>* Ansprüche 1-3; Figuren *<br>– – – – – | 1 | |
| | | | **RECHERCHIERTE SACHGEBIETE (Int. Cl.5)**<br><br>F 16 H<br>B 60 K |

Der vorliegende Recherchenbericht wurde für alle Patentansprüche erstellt

| Recherchenort | Abschlußdatum der Recherche | Prüfer |
|---|---|---|
| Den Haag | 25 April 91 | TOPP-BORN S. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
------------------------------------------------------------
& : Mitglied der gleichen Patentfamilie, übereinstimmendes Dokument